# EUROPÄISCHE PATENTANMELDUNG

(11) **EP 1 533 282 A1**
(43) Veröffentlichungstag der Anmeldung: **25.05.2005**
(21) Anmeldenummer: 04004146.9
(22) Anmeldetag: 24.02.2004
(51) Int. Cl.: C03B 29/02, C03B 9/42

(54) **Verfahren zum Feuerpolieren von Glas mittels Brennersteuerung**

(30) Priorität: 21.11.2003 DE 10354411
(71) Anmelder: Linde Aktiengesellschaft, 65189 Wiesbaden (DE)
(72) Erfinder: Görisch, Matthias, 90765 Fürth (DE); Häckh, Volker, 82166 Gräfelfing (DE); Mahrenholtz, Hans, 86567 Hilgertshausen (DE); Mieth, Rainer, 85591 Vaterstetten (DE)

(57) **Zusammenfassung**

Die Erfindung betrifft ein Verfahren zum Feuerpolieren eines Glasteils, insbesondere aus Bleikristall, bei dem zumindest ein Teil der Oberfläche des Glasteils mit der Flamme eines Brenners, dem ein Gasgemisch aus einem Brenngas und einem sauerstoffhaltigen Gas zugeführt wird, erhitzt und aufgeschmolzen wird. Die Erfindung ist dadurch gekennzeichnet, dass der Brenner relativ zu der Oberfläche des Glasteils bewegt wird, so dass nacheinander für verschiedene zu polierende Bereiche der Oberfläche des Glasteils ein Winkel zwischen der Flamme und dem Teil der Oberfläche, der poliert wird, zwischen 75° und 105°, insbesondere im wesentlichen 90°, eingestellt wird.

## Beschreibung

Die Erfindung betrifft ein Verfahren zum Feuerpolieren eines Glasteils, insbesondere aus Bleikristall, bei dem zumindest ein Teil der Oberfläche des Glasteils mit der Flamme eines Brenners, dem ein Gasgemisch aus einem Brenngas und einem sauerstoffhaltigen Gas zugeführt wird, erhitzt und aufgeschmolzen wird.

Bleigläser und Bleikristallgläser müssen nach dem Preßformen zur Entfernung von Graten und anderen Oberflächendefekten nachgearbeitet werden. Hierzu werden diese bisher meist einer Mischung aus Fluß- und Schwefelsäure ausgesetzt. In dem Säurebad wird die oberste Schicht der Gläser abgetragen und so das Glas auf Hochglanz gebracht. Problematisch an diesem Verfahren sind allerdings die bei der Säurepolitur entstehenden giftigen Emissionen sowie die mit Blei, Arsen und Antimon verunreinigten Säurereste, welche eine beträchtliche Umweltbelastung verursachen.

In der EP 0 136 934 wird daher ein Verfahren zum säurefreien Polieren von Glasoberflächen mittels eines Brenners vorgeschlagen. Hierzu wird ein außenmischender Sauerstoff-Wasserstoff-Brenner, d.h. ein Brenner, dem der Sauerstoff und der Wasserstoff getrennt zugeführt werden, verwendet, mit dessen Hilfe die Glasoberfläche aufgeschmolzen wird. Der außenmischende Brenner erzeugt jedoch nur eine weiche Flamme, die in Ecken, Löcher oder Vertiefungen auf der Glasoberfläche nicht eindringen kann. Mit dieser Feuerpolitur wird daher nur an den leicht zugänglichen Bereichen der Glasoberfläche ein zufriedenstellendes Ergebnis erzielt. Durch längere Erwärmung des Glases ist es zwar möglich, mit einem außenmischenden Brenner Grate oder Oberflächendefekte auch in Ecken und Löchern zu beseitigen, jedoch besteht dabei die Gefahr, dass das Glas aufgrund der langen Erwärmung in sich zusammenfällt.

Aus der US 3,188,190 ist ein Verfahren zum Feuerpolieren von preßblasgeformten Flaschen mittels eines vormischenden Brenngas-Sauerstoff-Brenners bekannt. Bei nach diesem Verfahren gefertigten Flaschen ist es lediglich notwendig, Grate am Flaschenmund zu entfernen. Hierzu werden die aus dem Brennerkopf austretenden Flammen von oben auf die Flasche gerichtet, so dass die Glasoberfläche im Bereich des Flaschenmundes durch die streifend einfallenden Flammen aufgeschmolzen wird. Diese Vorgehensweise ist jedoch nicht dazu geeignet, einen größeren Oberflächenbereich, welcher Vertiefungen oder andere Unregelmäßigkeiten aufweist, aufzuschmelzen, da hierzu eine lange und starke Erwärmung der Flasche notwendig wäre, wodurch die Flasche in sich zusammenfallen würde.

Aufgabe vorliegender Erfindung ist es daher, ein Verfahren der eingangs genannten Art aufzuzeigen, mit dem eine gute Politur des Glasteils und eine hohe Oberflächenqualität auch an schwer zugänglichen Stellen und auf effiziente Weise erzielt wird.

Diese Aufgabe wird erfindungsgemäß dadurch gelöst, dass der Brenner relativ zu der Oberfläche des Glasteils bewegt wird, so dass nacheinander für verschiedene zu polierende Bereiche der Oberfläche des Glasteils ein Winkel zwischen der Flamme und dem Teil der Oberfläche, der poliert wird, zwischen 75° und 105°, insbesondere im wesentlichen 90°, eingestellt wird.

Dabei ergibt sich der besondere Vorteil, dass während des Herstellungsprozesses von dem Glasteil aufgenommene Wärmeenergie zumindest zum Teil für den Polierprozeß genutzt wird. Da das Glasteil somit noch warm ist, reduziert sich die notwendige Einwirkzeit der Polierflamme auf das Glasteil.

In umfangreichen Untersuchungen hat sich gezeigt, dass die Art und die Orientierung der Flammen bei der Feuerpolitur von Glasteilen, insbesondere von solchen mit unregelmäßigen Oberflächen, die wesentlichen Faktoren sind. Bei dem erfindungsgemäß verwendeten vormischenden Brenner werden ein Brenngas und ein sauerstoffhaltiges Gas vorgemischt und als Gasgemisch dem Brennerkopf zugeführt. Im Vergleich zu einem außenmischenden Brenner, bei dem getrennte Leitungen für das Brenngas und das sauerstoffhaltige Gas zum Brennerkopf vorgesehen sind, wird mit einem vormischenden Brenner eine sehr viel härtere Flamme erzielt. Diese kann auch in Löcher, Unebenheiten, Vertiefungen, Kanten oder sonstige Unregelmäßigkeiten der Glasoberfläche vordringen und dort das Glasteil polieren. Die härtere Flamme hat zudem den Vorteil, dass die Wärmeübertragung auf das Glasteil in höherem Maße durch Konvektion erfolgt, welche, im Gegensatz zur Wärmeübertragung durch Strahlung, im wesentlichen nur auf die Glasoberfläche und nicht auf das gesamte Glasteil einwirkt. Eine unerwünschte Erwärmung des Glasteils, die zu Verformungen des Glasteils führen kann, wird vermieden.

Neben der Wahl einer harten Flamme ist es genauso wichtig, die Flamme möglichst senkrecht, zumindest aber unter einem Winkel von 75° bis 105°, zu dem Teil der Oberfläche des Glasteils auszurichten, welcher von der Flamme poliert werden soll. Hierdurch wird eine sehr effektive Bearbeitung der Glasoberfläche'bei geringer Wärmebelastung des Glasteils erreicht und auch schwer zugängliche Stellen der Glasoberfläche können mit hoher Qualität poliert werden, ohne dass sich die Form des Glasteils aufgrund zu starker Erhitzung verändert.

Gemäß herkömmlichen Verfahren werden auf die Glasoberfläche mehrere Flammen gerichtet, wobei jede der Flammen einen Teil der Oberfläche, auf welches sie gerichtet ist, poliert. Die einzelnen Flammen werden also entsprechend der Form der zu polierenden Glasoberfläche ausgerichtet.

Demgegenüber liegt der besondere Vorteil der Erfindung darin, dass ein oder mehrere Brenner bewegbar angebracht werden, so dass sie mit Hilfe einer Steuer- oder Regeleinrichtung immer so zu plazieren sind, dass die gewünschte Winkelrelation zu einem Teil der Oberfläche des zu polierenden Glasteils erfüllt ist.

Bevorzugt wird die Bewegung des Brenners automatisch gesteuert oder geregelt. Durch ein geeignetes Steuer- oder Regelverfahren werden alle Teile des Glasteils nacheinander während des Poliervorganges poliert.

Besonders bevorzugt wird genau ein Brenner zum Feuerpolieren des Glasteils eingesetzt. Zweckmäßigerweise werden alle Bereiche der Oberfläche des Glasteils poliert.

Vorzugsweise wird zum Aufschmelzen der Oberfläche ein Leistenbrenner verwendet. Leistenbrenner besitzen eine Vielzahl im wesentlichen linear angeordneter Bohrungen, aus denen das Gemisch aus Brenngas und sauerstoffhaltigem Gas austritt. Die Leistenbrenner sind mit 50 bis 1000, bevorzugt mit 100 bis 200, Bohrungen pro Leiste versehen. Bei außenmischenden Leistenbrennern, bei denen das sauerstoffhaltige Gas und das Brenngas aus separaten Bohrungen austreten, tritt das Problem auf, dass bei einer Verstopfung einer der Bohrungen, beispielsweise einer Öffnung für das sauerstoffhaltige Gas, das Glasteil an dieser Stelle nur mit dem Brenngas bzw. mit einem Überschuß an Brenngas erhitzt wird. Da ein Brenngasüberschuß aber zum Beispiel bei Bleigläsern reduzierend wirkt und die Qualität des Glasteils nachteilig beeinflußt, muß die Sauerstoffmenge entsprechend erhöht werden. Dies hat zur Folge, dass alle anderen Flammen des Leistenbrenners mit entsprechendem Sauerstoffüberschuß brennen, d.h. das ursprünglich eingestellte optimale Sauerstoff-Brenngas-Verhältnis kann nicht aufrechterhalten werden.

Bei der Verwendung vormischender Leistenbrenner bleibt dagegen auch bei einer Verstopfung einzelner Bohrungen das Sauerstoff-Brenngas-Verhältnis jeder einzelnen Flamme gleich. Veränderungen an dem Glasteil, wie sie beispielsweise durch reduzierend wirkende Flammen hervorgerufen werden können, sind ausgeschlossen.

Als Brenner haben sich sowohl Brenner, die mit Wasserstoff und einem sauerstoffhaltigen Gas, als auch solche, die mit einem kohlenwasserstoffhaltigen Gas, insbesondere Erdgas, und einem sauerstoffhaltigen Gas betrieben werden, bewährt. Wasserstoff-Sauerstoff-Brenner haben den Vorteil eines effektiveren Aufschmelzens der Oberfläche, aus Kosten- und Sicherheitsgründen werden dagegen Erdgas-Sauerstoff-Brenner bevorzugt.

Mit der Erfindung ist es nicht mehr erforderlich, das Glasteil während des Poliervorgangs zu drehen. Es verbleibt an Ort und Stelle während der oder die Brenner bewegt werden. Dabei werden sowohl Schwenkbewegungen wie auch Längsverschiebungen eingesetzt. Das Bewegungsmuster wird an die Form des Glasteils angepasst. Die Form des Glasteils geht also als eine Eingangsgröße in das Steuer- oder Regelverfahren ein. Beim Einsatz eines Regelverfahrens erhält die Regelvorrichtung eine Rückmeldung von einem Sensor, der die Qualität der Politur ermittelt. Beispielsweise wird dazu ein Sensor eingesetzt, der den Lichtreflexionsgrad der Oberfläche mißt.

Von Vorteil wird in einem Arbeitsgang im wesentlichen die gesamte äußere Oberfläche und/oder die gesamte innere Oberfläche eines zumindest teilweise hohlen Glasteils feuerpoliert. Dazu ist also erfindungsgemäß nur noch ein Brenner erforderlich.

Besonders günstig ist es, wenn bei einem hohlen Glasteil gleichzeitig die innere und die äußere Oberfläche oder Teile von diesen Oberflächen erhitzt und aufgeschmolzen werden. So kann in einem einzigen Arbeitsgang das gesamte Glasteil feuerpoliert werden. Dazu sind dann zwei Brenner erforderlich.

Bei Tests hat sich herausgestellt, dass die Einwirkzeit der Flamme des Brenners auf das Glasteil vorzugsweise zwischen 10 und 60 Sekunden, besonders bevorzugt zwischen 20 und 50 Sekunden, liegt. Innerhalb dieser Zeitspanne wird ein ausreichendes Aufschmelzen der obersten Glasschichten erreicht, durch welches Grate und Oberflächendefekte beseitigt werden, ohne dass Verformungen des Glasteils auftreten.

Insbesondere ist das erfindungsgemäße Verfahren bei der Feuerpolitur von dickwandigen und/oder preßgeformten Glasteilen, insbesondere mit Wandstärken zwischen 5 und 20 mm, bevorzugt zwischen 7 und 20 mm, von Vorteil.

Bisher ist man davon ausgegangen, dass die Temperatur des Kühlmittels möglichst niedrig zu wählen ist, um einen entsprechend hohen Wärmetransfer vom Brenner auf das Kühlmittel zu erzielen. Es hat sich jedoch gezeigt, dass bei Kühlmitteltemperaturen unter 40°C Wasserdampf am Brennerkopf kondensieren und das dabei entstehende Kondensat auf das heiße Glasteil tropfen und dieses beschädigen kann. Vorzugsweise wird daher der Brenner mit einem Kühlmittel, welches eine Temperatur von mehr als 40°C, bevorzugt eine Temperatur zwischen 40°C und 60°C, aufweist, gekühlt. Als Kühlmittel für den Brenner hat sich insbesondere Wasser bewährt.

Zudem hat es sich als günstig erwiesen, das Glasteil während des Aufschmelzens mittels eines Luftstromes zu kühlen. Beispielsweise ist es vorteilhaft, das Innere eines hohlen Glasteils mit Kühlluft zu spülen, während die äußere Oberfläche des Glasteils erfindungsgemäß aufgeschmolzen wird. Formänderungen des Glasteils während des Feuerpolierens können so nahezu ausgeschlossen werden.

Es hat sich weiter gezeigt, dass es vorteilhaft ist, wenn unmittelbar nach einer Unterbrechung der Brenngas-Sauerstoff- oder Wasserstoff-Sauerstoff-Zufuhr zu dem Brenner dem Brenner ein Inert- oder Spülgas zugeführt wird. Durch das Spülen des Brenners wird auch das Glasteil, nachdem die Oberfläche aufgeschmolzen ist, mit dem Inert- oder Spülgas umflutet und dadurch gleichmäßig abgekühlt. Auf diese Weise ist es gelungen, das Glas soweit abzukühlen, um es deformationsfrei mit einem Greifer oder Sauger transportieren zu können.

Als Inert- bzw. Spülgas, welches dem Brenner unmittelbar nach einer Unterbrechung der Brenngas-Sauerstoff- oder Wasserstoff-Sauerstoff-Zufuhr zugeführt wird, hat sich ein stickstoffhaltiges Gas, insbesondere reiner Stickstoff, als günstig erwiesen, da dieser weder eine Reaktion mit dem Brenngas oder dem Wasserstoff noch mit dem Glas eingeht.

## Patentansprüche

1. Verfahren zum Feuerpolieren eines Glasteils, insbesondere aus Bleikristall, bei dem zumindest ein Teil der Oberfläche des Glasteils mit der Flamme eines Brenners, dem ein Gasgemisch aus einem Brenngas und einem sauerstoffhaltigen Gas zugeführt wird, erhitzt und aufgeschmolzen wird, **dadurch gekennzeichnet, dass** der Brenner relativ zu der Oberfläche des Glasteils bewegt wird, so dass nacheinander für verschiedene zu polierende Bereiche der Oberfläche des Glasteils ein Winkel zwischen der Flamme und dem Teil der Oberfläche, der poliert wird, zwischen 75° und 105°, insbesondere im wesentlichen 90°, eingestellt wird.

2. Verfahren nach Anspruch 1, **dadurch gekennzeichnet, dass** die Bewegung des Brenners automatisch gesteuert oder geregelt wird.

3. Verfahren nach Anspruch 1 oder 2, **dadurch gekennzeichnet, dass** genau ein Brenner eingesetzt wird.

4. Verfahren nach einem der Ansprüche 1 bis 3, **dadurch gekennzeichnet, dass** alle Bereiche der Oberfläche des Galsteils poliert werden.

5. Verfahren nach einem der Ansprüche 1 bis 4, **dadurch gekennzeichnet, dass** die Oberfläche mit einem Leistenbrenner aufgeschmolzen wird.

6. Verfahren nach einem der Ansprüche 1 bis 5, **dadurch gekennzeichnet, dass** dem Brenner ein Gasgemisch aus Wasserstoff und einem sauerstoffhaltigen Gas oder aus einem kohlenwasserstoffhaltigen Gas und einem sauerstoffhaltigen Gas zugeführt wird.

7. Verfahren nach einem der Ansprüche 1 bis 6, **dadurch gekennzeichnet, dass** im wesentlichen die gesamte innere und/oder äußere Oberfläche eines hohlen Glasteils aufgeschmolzen werden.

8. Verfahren nach einem der Ansprüche 1 bis 6, **dadurch gekennzeichnet, dass** gleichzeitig die innere und die äußere Oberfläche eines hohlen Glasteils aufgeschmolzen werden, wozu zwei Brenner eingesetzt werden.

9. Verfahren nach einem der Ansprüche 1 bis 8, **dadurch gekennzeichnet, dass** die Oberfläche zwischen 10 und 60 Sekunden erhitzt wird.

10. Verfahren nach einem der Ansprüche 1 bis 9, **dadurch gekennzeichnet, dass** ein preßgeformtes und/oder dickwandiges Glasteil feuerpoliert wird.

11. Verfahren nach Anspruch 10, **dadurch gekennzeichnet, dass** ein Glasteil mit einer Wandstärke zwischen 5 und 20 mm, insbesondere zwischen 7 und 20 mm feuerpoliert wird.

12. Verfahren nach einem der Ansprüche 1 bis 11, **dadurch gekennzeichnet, dass** der Brenner mit einem Kühlmittel, insbesondere Wasser, mit einer Temperatur von mehr als 40°C, bevorzugt zwischen 40 und 60°C, gekühlt wird.

13. Verfahren nach einem der Ansprüche 1 bis 12, **dadurch gekennzeichnet, dass** das Glasteil während des Feuerpolierens mittels eines Luftstromes gekühlt wird.

14. Verfahren nach einem der Ansprüche 1 bis 13, **dadurch gekennzeichnet, dass** unmittelbar nach einer Unterbrechung der Gasgemisch-Zufuhr zu dem Brenner dem Brenner ein Inert- oder Spülgas zugeführt wird.

15. Verfahren nach Anspruch 14, **dadurch gekennzeichnet, dass** dem Brenner als Inert- oder Spülgas ein stickstoffhaltiges Gas zugeführt wird.
